(19) **Europäisches Patentamt**

**European Patent Office**

**Office européen des brevets**

(11) **EP 0 928 704 B1**

(12) **EUROPEAN PATENT SPECIFICATION**

(45) Date of publication and mention
of the grant of the patent:
**14.04.2004 Bulletin 2004/16**

(51) Int Cl.$^7$: **B60C 9/22**, B60C 9/18,
B60C 9/12, B60C 9/14

(21) Application number: **97830723.9**

(22) Date of filing: **29.12.1997**

(54) **High transverse curvature tyre for two-wheeled vehicles**

Reifen mit hoher Querkrümmung für Zweiradfahrzeuge

Bandage pneumatique à haute courbure transversale pour véhicules à deux roues

(84) Designated Contracting States:
**AT BE CH DE DK ES FR GB GR IE IT LI LU NL PT SE**
Designated Extension States:
**RO**

(43) Date of publication of application:
**14.07.1999 Bulletin 1999/28**

(73) Proprietor: **PIRELLI PNEUMATICI S.p.A.**
**20126 Milano (IT)**

(72) Inventors:
• **Armellin, Giancarlo**
**20054 Nova Milanese (Milano) (IT)**
• **Kronthaler, Peter**
**81247 München (DE)**

• **Zöller, Thomas**
**80638 München (DE)**

(74) Representative: **Bottero, Claudio et al**
**Porta, Checcacci & Associati S.p.A.**
**Viale Sabotino, 19/2**
**20135 Milano (IT)**

(56) References cited:
**EP-A- 0 329 589**       **EP-A- 0 703 102**
**EP-A- 0 718 122**       **EP-A- 0 808 730**

• **PATENT ABSTRACTS OF JAPAN vol. 098, no. 003, 27 February 1998 & JP 09 286204 A (BRIDGESTONE CORP), 4 November 1997,**

## Description

Background of the invention

In its more general aspect, the present invention relates to a high transverse-curvature tire for two-wheeled vehicles.

More particularly, the invention relates to a tire preferably, though not exclusively, usable in the so-called high-performance "touring" motor-bikes having a high weight.

Known art

In the field of production of tires for two-wheeled vehicles, and in particular, those intended for equipping the so-called "touring" motor-bikes generally having a swept volume exceeding 1000 cm$^3$, a high weight and a high torque, the need is increasingly felt of providing ever higher performances in terms of road behavior both in straight stretch and in curve, stability of the vehicle at high speed, kilometric yield, wear uniformity and regularity, and low weight.

In order to satisfy this need, tires for two-wheeled vehicles have been manufactured for a long time with a carcass structure comprising a couple of plies made of rubberized fabric reinforced' with cords symmetrically inclined with respect to the equatorial plane of the tire - usually known as cross-plies carcass - and possibly an intermediate structure (breaker), also realized with couples of strips made of rubberized fabric provided with cords arranged at an angle with respect to the equatorial plane of the tire. A carcass structure of this kind is disclosed for example in EP-A-0 703 102.

Even though this tire structure could ensure an extremely regular curve behavior of the motor-bike, the use of this type of tires involved problems of comfort, stability of the vehicle at high speed, and especially of irregular wear of the tread, often associated to a removal of bulk portions of rubber, according to a phenomenon known in the art by the term of: "chunking".

To try to prevent these drawbacks and as disclosed, for example, in EP-A-0 808 730, it was then suggested to use a tire comprising a carcass structure of the so-called "radial" type, i.e. a tire provided with reinforcing cords essentially perpendicular to the equatorial plane of the tire, on which structure a belt structure comprising at least one couple of strips made of rubberized fabric provided with cords placed at an angle with respect to the equatorial plane of the tire or, alternatively, a cord winding, preferably made of metal, oriented in a circumferential direction and known in the art by the term of: zero-degree cords, is coaxially associated.

Even though the tires provided with a radial carcass have improved the situation in terms of comfort and vehicle straight-away stability at high speed with a substantial elimination of chunking phenomena - to such an extent that they are considered top range products by those skilled in the art - they are not suitable for use in the so-called "touring" motor-bikes having a high-weight and a high performance.

Actually, the motor-cycles of this type equipped with a tire having a radial carcass are particularly subject to an undesired "floatation" effect while running along a curve, also known by the term of "pudding effect", which causes the motor-bike to undergo a swaying phenomenon that would not be easily damped and that, in some instances, may be even self-amplifying. In extreme conditions, this phenomenon may even lead drivers to lose control of the vehicle, with obviously deleterious consequences.

Summary of the invention

According to the present invention, the Applicant has now understood that the problem of achieving adequate performances in terms of road behavior, both in straight stretches and along curves, stability of the vehicle at high speeds, kilometric yield, wear regularity and low weight can be solved by combining a cross-plies carcass structure having at least one couple of superposed plies provided with reinforcing cords inclined with respect to the equatorial plane of the tire, with a belt structure including a radially outer layer comprising a plurality of zero-degree cords and a radially inner layer comprising at least one sheet made of an elastomeric material.

In other words, the Applicant has become aware of the fact that the aforesaid problem can be effectively solved by renouncing to use the radial carcass, i.e., the very structure that is unanimously considered by those skilled in the art as the "top", of the available technology, provided that the cross-plies carcass equipped with reinforcing_ inclined cords is adequately separated from the belt layer comprising the zero-degree cords, by interposing a sheet made of an elastomeric material.

Hence, the present invention provides a tire as defined in attached claim 1.

According to the invention, the Applicant has in particular and unexpectedly found that by interposing a sheet made of an elastomeric material between the cross-plies carcass structure and the radially outer layer provided with zero-degree cords of the belt structure, it is possible to achieve at the same time both the desired features of road holding and curve stability imparted to the tire by the carcass structure, and the desired features of comfort, wear regularity and uniformity and stability of the vehicle at high speeds in straight stretches, imparted to the tire by the zero-degree cord layer of the belt structure.

More particularly, the Applicant has unexpectedly found that said sheet made of an elastomeric material allows the cross-plies carcass structure and the zero-degree cords of the belt structure to exercise the aforesaid effects substantially independently from one another, preventing at the same time the zero-degree cords from damaging the reinforcing cords of the underlying carcass structure.

Thanks to the structural features of the cross-plies carcass structure, the tire of the invention is able to develop high camber thrusts quite sufficient to balance the centrifugal thrust affecting the motor-bike, with a very homogeneous curve behavior.

According to the invention, it has also been found that camber and drift thrusts developed by the tire are increased by the combination of at least one couple of carcass plies provided with reinforcing cords crown-forming a suitable angle with respect to the equatorial plane of the tire, with the radially outer layer incorporating the zero-degree cords of the belt.

Thanks to this feature, it was observed that a motor-bike equipped with a couple of tires having such a structure shows advantageous features of neutral driving, so that the driver can travel the curvilinear trajectory by simply inclining the vehicle and without correcting its trim, in particular the steering angle of the handlebar.

Besides, it was found that the cross-plies carcass lends the tire advantageous features of transverse strength and curve stability, while the aforesaid belt structure lends the tire dimensional stability, directional stability and lower energy absorption, achieving at the same time a low rolling resistance and a substantial disappearance of the chunking phenomenon.

In particular, it was observed that the presence in the belt structure of a radially outer layer provided with zero-degree cords allows to increase both the directional stability and the tire ground-contacting area, i.e. the area of contact with the ground, in all of the operating conditions of the tire.

Thanks to this feature, both the stresses due to scraping on the road and the stresses due to hysteresis dissipation in the rubber composition of the tread are reduced, with a substantial reduction in tire overheating due to the centrifugal force which develops during running, counterbalanced by the substantial inextensibility of the radially outer layer provided with zero-degree cords of the belt structure.

The adoption of such a combination of carcass and belt structures contributes to reduce the weight of the tire, with all of the ensuing advantages in terms of inertia due to the non suspended masses.

Preferably, the reinforcing cords incorporated in the ply(plies) of the carcass structure are essentially constituted by high modulus fibers of a material selected from the group comprising: rayon, nylon, polyethylene naphthalene 2,6 dicarboxylate (PEN) and polyethylene terephthalate (PET).

Preferably, the reinforcing cords incorporated in the plies of the carcass structure form a crown angle - measured at the equatorial plane of the tire - comprised between 25° and 70° with respect to the equatorial plane of the tire.

In this way an optimum curve behavior of the tire was observed, with the development of an adequate camber-thrust.

According to the invention, the carcass structure of the tire comprises at least one couple of superposed plies, each provided with reinforcing cords parallel to one another and oriented according to a direction inclined and opposite, preferably symmetrically, with respect to the equatorial plane of the tire with respect to the cords of the adjacent ply.

Preferably, the reinforcing cords incorporated in the carcass plies are made of a material different from the material of the reinforcing cords of the radially adjacent ply.

In such case, it is preferable to select materials having a modulus that increases as one radially proceeds toward the outside; in so doing, a further advantageous increase was observed in the effect of containing the thrusts due to the centrifugal force carried out by the belt structure.

Preferably, as the crown angle formed by the reinforcing cords of the carcass plies decreases, it may be convenient to insert between the latter at least one sheet made of an elastomeric material, possibly incorporating binding means suitable to increase its stretcheability properties without substantially altering the adhesion properties of the elastomeric material in the green state.

In this way, it is possible to absorb the tearing stresses that are generated between the carcass plies during rolling of the tire.

Preferably, the aforesaid binding means comprise the so-called aramid pulp (short fibrillated fibers of poly-paraphenylene-terephtalamide), of the type commercially known as "Kevlar®-pulp" or "Twaron®-pulp" (Kevlar and Twaron are registered trademarks of DuPont and Akzo, respectively).

Preferably, said short fibrillated fibers are incorporated in the elastomeric material that makes up said sheet, in an amount comprised between 1 and 10 parts by weight per each 100 parts by weight of rubber (phr), and have a length comprised between 0.1 mm and 2.5 mm.

Advantageously, said sheet made of an elastomeric material has a thickness comprised between 0,075 and 0.5 mm.

According to the invention, the belt structure coaxially extending around the carcass structure comprises a radially inner layer including at least one sheet made of an elastomeric material.

As illustrated hereinabove, such sheet acts as an element suitable to separate, from both the structural and the functional viewpoints, the carcass structure from the layer including the zero-degree cords of the belt structure, preventing, among other things, the latter from damaging the reinforcing cords of the underlying carcass structure possibly causing a fatigue break of the same.

In order to optimize such separation action, the aforesaid sheet made of an elastomeric material has a thickness comprised between 0.5 and 3 mm and, still more preferably, between 1 and 3 mm.

Preferably, furthermore, such sheet made of an elastomeric material incorporates appropriate binding means suitable to increase its stretcheability properties without substantially altering the adhesion properties of the elastomeric material in the green state.

Preferably, the aforesaid binding means comprise the so-called aramid pulp (short fibrillated fibers of poly-paraphenylene-terephtalamide), of the type commercially known as "Kevlar®-pulp" or "Twaron®-pulp (Kevlar and Twaron are registered trademarks of DuPont and Akzo, respectively).

Preferably, said short fibrillated fibers are incorporated in the elastomeric material that makes up said sheet, in an amount comprised between 1 and 10 phr, and have a length comprised between 0.1 mm and 2.5 mm.

Preferably, said short fibrillated fibers are preoriented, for instance by means of a calendering operation, according to the main direction of the forces which the supporting element is subject to during the tire manufacturing process. Such direction is usually the circumferential direction of the tire and said preorientation operation is preferably carried out by calendering said sheet during its manufacture.

The elastomeric material reinforced with said aramid pulp has, at the green state, a tensile stress at break comprised between 3 and 7 MPa, with a 50% elongation at a tensile stress comprised between 0,6 and 3 MPa, while the same elastomeric material without aramid pulp has, at the green state, a tensile stress at break comprised between 1 and 2 MPa, with a 50% elongation at a tensile stress comprised between 0,2 and 0,5 MPa.

Preferably, the material that constitutes the sheet of the radially inner layer of the belt structure is a natural rubber-based composition containing carbon-black in an amount comprised between 30 and 70 phr, filled with the usual ingredients known in the art (plasticizers, protecting agents, antidegradation agents, vulcanizers), so as to obtain an elastomeric matrix as similar as possible to that of the elements to which said sheet has to adhere.

As illustrated hereinabove, the radially outer layer of the belt structure comprises a plurality of circumferential coils, axially arranged side by side, of at least one inextensible cord, wound at a substantially null angle with respect to the equatorial plane of the tire, and usually known in the art by the term of zero-degree cords.

Preferably, the zero-degree cord or cords of the radially outer layer of the belt structure are high-elongation metal cords with high carbon content steel wires.

Alternatively, the zero-degree cords may be textile cords made of aramid.

When a tire to be mounted on the rear wheel of a motor-bike is to be manufactured, the cord coils arranged at a substantially null angle with respect to the equatorial plane of the tire are preferably distributed with a constant thickness throughout the axial development of the belt structure.

Instead, when a tire to be mounted on the front wheel of a motor-bike is to be manufactured, the cord coils arranged at a substantially null angle with respect to the equatorial plane of the tire are preferably distributed with a variable thickness throughout the axial development of the belt structure.

According to this last embodiment of the invention, the distribution thickness of the cord coils progressively changes along the layer, from the equatorial plane toward the ends, preferably according to a prefixed relation, having a value not higher than 15 cords/cm in an area placed on either side of the equatorial plane of the tire.

In this way, it is advantageously possible to obtain a belt structure which is at the same time flexible in the middle, to absorb and damp the vibrations due to the ground roughness, and rigid along the sides, to develop high slip thrusts.

According to the experiments carried out by the Applicant, such relation may conveniently have the following expression:

$$Nx = K\frac{R^2}{r^2}No$$

wherein:

- No is the number of cord coils arranged in a central portion of unitary length located on either side of the equatorial plane of the belt structure;

- R is the distance between the center of said portion and the rotation axis of the tire;

- r is the distance between the center of the generic unitary portion comprised between the equatorial plane and the ends of said radially outer layer of the belt structure and the rotation axis of the tire;

- K is a parameter that takes into account the constituent material and the formation of cords, as well as the amount of rubber around the cord, and the weight of a portion of the radially inner layer of the belt structure at said unitary portion, which is variable with variations in the material type and in the structural features of the radially inner layer of the belt structure along the crown profile that diverge from the reference values.

This parameter K may have a value of substantially close to 1 if all the cords have the same formation and all the connected materials are the same throughout the layers, or different values according to the variations in the materials and formation of the reinforcing elements along the peripheral development of the belt structure.

A distribution of the cords in accordance with such relation ensures both uniformity of the stress acting on the belt structure during use of the tire as a consequence of the centrifugal force applied, and the necessary differentiated stiffness along the axial direction.

Obviously, those skilled in the art may find other relations which, depending on the aforesaid design variables, would allow to obtain at the same time a differentiated stiffness along the axial direction and a stress uniformity in the belt structure of the running tire, by varying in a controlled and predetermined manner the thickness of the aforesaid cords.

As to the thickness of the zero-degree cords in the portion located on either side of the equatorial plane, where the maximum thinning out take place, this thickness is preferably not greater than 8 and more preferably comprised between 3 and 6 cords/cm.

The width of said portion varies preferably from 10% to 30% of the axial development of the belt.

Conveniently, the quantity of cords in said central portion is equal to a value comprised between 60% and 80% of the cords quantity near the shoulders of the tire, where the thickness of said cords is preferably not greater than 10 and more preferably included between 6 and 8 cords/cm.

Brief description of the drawings

Additional features and advantages will be more readily apparent by the following description of a preferred embodiment of a tire according to the invention, solely provided by way of non limitative indication, reference being made to the attached drawings.

In such drawings:

- Figure 1 shows a cross-section view of a tire according to the invention;

- Figure 2 shows a plan view, schematic and simplified, of some portions of the carcass and belt structures of the tire of Figure 1;

- Figure 3 shows a plan view, schematic and simplified, of some portions of the carcass and belt structures of an alternative embodiment of the tire of the invention.

Detailed description of preferred embodiments

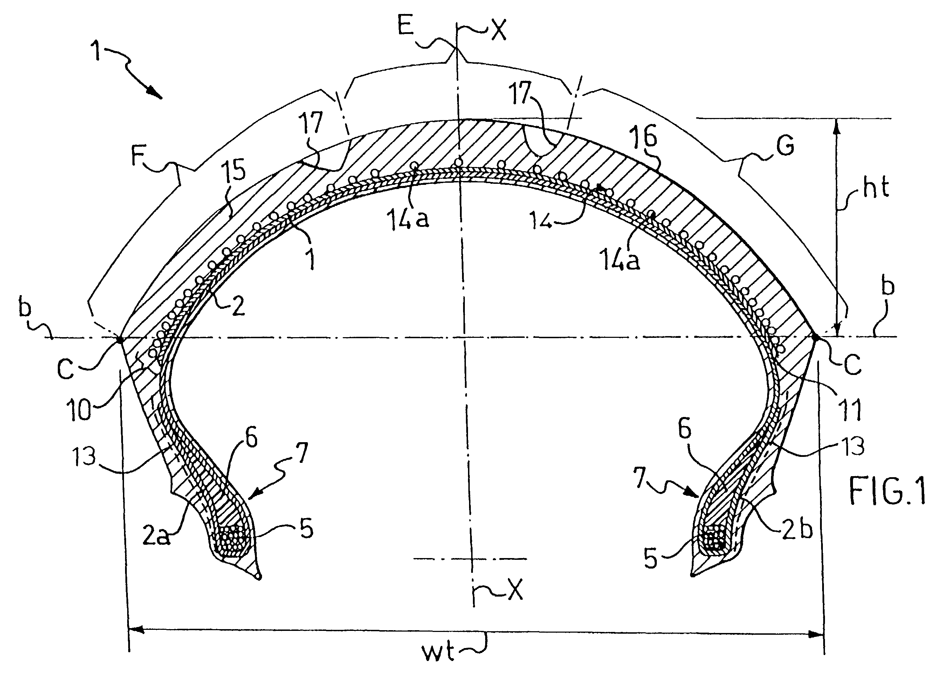

In Figure 1, 1 indicates a high-transverse-curvature tire intended for two-wheeled vehicles, in particular a tire to be mounted on a high-performance motor-bike of the so-called "touring" type.

As is known, the extent of the tire transverse curvature is defined by the specific value of the ratio, generally known by the term of camber, between the distance ht (measured along the equatorial plane x-x) of the tread crown from the line b-b passing through the ends C of the tread and the distance wt measured along the tire chord, between said ends.

If the tread ends cannot be easily identified, for instance due to the lack of a precise reference such as for instance the edge indicated by C in Figure 1, the value of the tire maximum chord may be assumed as the distance wt.

Tire 1 comprises a carcass structure 2, including at least one couple of carcass plies whose opposite side edges 2a, 2b are turned around respective bead cores 5.

On the external peripheral edge of bead cores 5, an elastomeric filling 6 is applied which fills the space defined between the carcass structure 2 and the corresponding turned side edges 2a, 2b of the same.

As is known, the tire area comprising bead cores 5 and filling 6 forms the so-called bead, globally indicated by 7, intended for anchoring the tire 1 onto a corresponding mounting rim, not shown.

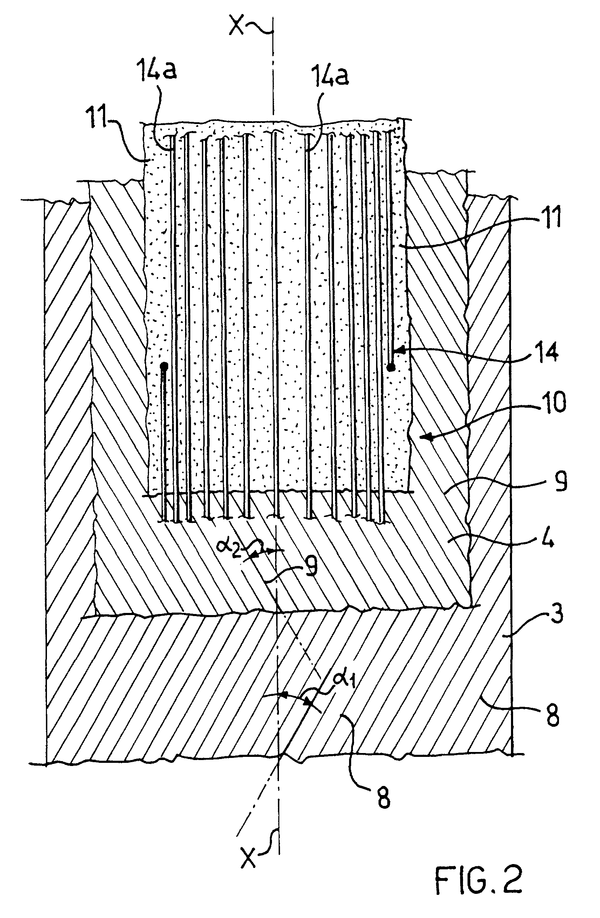

According to the invention, the carcass structure 2 comprises a couple of radially inner and radially outer carcass plies 3, 4, essentially constituted by a sheet of an elastomeric material known per se, for instance made of a natural rubber-based material, incorporating a plurality of reinforcing cords 8, 9 (Figure 2).

Advantageously, said reinforcing cords are essentially parallel to one another and oriented according to inclined directions in each ply and opposed with respect to the cords of the adjacent ply with respect to the equatorial plane x-x of the tire 1.

The reinforcing cords 8 of the radially inner carcass ply 3 are constituted by textile fibers of nylon, rayon or PEN and form an angle $\alpha_1$ of about 50° with respect to the equatorial plane x-x of the tire 1.

The reinforcing cords 9 of the radially outer carcass ply 4 are constituted by rayon textile fibers and are inclined in an opposite direction with respect to the cords 8 of the radially inner ply 3, forming an angle $\alpha_2$ of about 50° with respect to the equatorial plane x-x of the tire 1.

According to a preferred embodiment, the cross-plies carcass structure 2 also comprises a strip 13 made of a reinforcing textile material in an axially outer position with respect to the turned side edges 2a, 2b of the same.

More particularly, the strip 13 is radially extending from a radially inner edge of bead core 5 up to at least the free end of the turned side edges 2a, 2b and preferably slightly beyond the same, and includes reinforcing cords made of metal or textile material, such as for instance nylon, rayon or aramid.

Preferably, such reinforcing'cords are essentially parallel to one another and are oriented according to inclined directions, preferably in an opposite direction with respect to the reinforcing cords 9 of the radially outer ply 4 of the side turned edges 2a, 2b adjacent to the strip 13, which reinforcing cords form an angle comprised between 20° and 50° with respect to the radial direction of the tire 1.

A belt structure 10, which comprises a radially inner layer and a radially outer layer, both comprising reinforcing elements of the structure, is coaxially associated to said carcass structure 2.

More particularly, the radially inner layer of the belt structure 10 comprises a sheet 11 made of an elastomeric material, preferably incorporating homogeneously dispersed fibrous reinforcing fillers made of a material selected from the group comprising textile and metal fibers, fiberglass or short fibrillated aramid fibers.

Conveniently, the sheet 11 incorporates as a reinforcing fibrous filler the so-called aramid pulp (short fibrillated fibers of poly-paraphenylene-terephtalamide), of the type commercially known as "Kevlar®-pulp" or "Twaron®-pulp" (Kevlar and Twaron are registered trademarks of DuPont and Akzo, respectively), or equivalent binding means, suitable to increase the properties of mechanical strength and stretcheability of the elastomeric material in the green state, without substantially altering the adhesion properties thereof.

In fact, it was found that in the presence of the aramid fibers dispersed in the composition of the elastomeric material which makes it up, the sheet 11 may take the form of an extremely thin sheet, for instance of a thickness of 0.5-3 mm, without undergoing any laceration as a consequence of the permanent sets caused in the same during the manufacturing steps of the tire.

More particularly, it was found that the best results are those obtained by incorporating the aramid pulp in the composition of the green elastomer in an amount comprised between 1 and 10 phr (parts by weight per 100 parts of rubber), and using fibers having a length comprised between 0.1 and 2.5 mm.

The resistance to the mechanical stresses imparted to the sheet 11 during the manufacturing steps of the tire 1 may also be further increased by shaping such sheet through calendering, so that the aramid fibers are preoriented according to a preferred direction. Such preferred direction, at least for the type of use of the described tire, is usually the circumferential direction of the tire, coinciding with the longitudinal direction of the sheet coming out of the calendering machine.

The radially outer layer of the belt structure 10 comprises a plurality of circumferential coils 14a, axially arranged side by side, of a cord 14 or a tape of few cords (preferably 2 to 5), circumferentially inextensible, spirally wound from one end to the other of the carcass structure 10.

It is here specified that the following description will always refer to cords, which term is intended to indicate also the individual elementary wires or the untwisted yarns, whenever the text will allow.

Besides, it is also pointed out that a constant winding pitch along the peripheral development of the belt structure 10 gives rise in any case, due to the curvature of the carcass structure 2, to a variable thickness along the axial direction.

According to the aforesaid arrangement, the cords 14 form a plurality of circumferential coils 14a, substantially oriented according to the rolling direction of the tire, usually called "zero-degree" arrangement with reference to its position with respect to the equatorial plane x-x of the tire 1.

Preferably, the cord coils 14a are wound on the sheet 11 according to a prefixed pitch, which is constant in the case of a rear tire and variable in the case of a front tire.

In the latter case the thickness of the cord coils 14a increases from the center toward the ends of the belt structure 10, as will appear more clearly hereinbelow.

Even though the coiling by itself and the pitch variability involve a winding angle different from zero, this angle remains so small that it may be substantially considered as always equal to zero degrees.

In a advantageous embodiment, the aforesaid cords 14 are the well known high elongation (HE) metallic cords, the use and the features of which have already been widely described, for instance in European Patent no. 0 461 464 of the same Applicant.

More in detail, such cords are constituted by a given number of strands, 1 to 5, preferably 3 to 4, each strand being constituted by a given number of individual wires, 2 to 10, preferably 4 to 14, having a diameter greater than 0.10 mm, preferably comprised between 0.12 and 0.35 mm. The wires in the strands and the strands in the cord are helically wound together in the same direction, with winding pitches equal or also different for the wires and the strands.

Preferably, the cords 14 are made of high carbon (HT) content steel wires, i.e. steel wires with a carbon content higher than 0.9%. In particular, in a specific prototype prepared by the Applicant, the helical winding of the radially outer layer of the belt structure 10 was constituted by a single cord 14, known as 3x4x0,20 HE HT, spiralled from one end of the belt structure to the other: the above description defines a metal cord formed of three strands each consisting of four elementary wires wound in the same direction as the strands and having a diameter of 0.20 mm; as is known, the abbreviation HE means "high elongation" and the abbreviation HT means "high tensile" steel.

Such cords have an ultimate elongation comprised between 4% and 8%, and a typical behavior to tensile stress, the well known and so called "spring behavior".

Because of this behavior - desired, on the other hand - it is possible to advantageously control the pre-loading condition of the zero-degree winding in the green tire, before the vulcanization.

This may be conveniently carried out for instance by winding the cord(s) while imparting some stress around the radially inner layer of the belt structure 10 previously arranged on the assembly drum.

Clearly, the preferred use of metal cords does not exclude, for the purposes of the invention, the use of other cords, in particular the likewise known textile cords made of aramid fiber, commercially known as Kevlar®, a registered trademark of DuPont.

As said hereinabove, when a tire adapted to be mounted on the front wheel of a motor-bike is to be manufactured, the distribution thickness of the cord coils 14a preferably progressively varies along the outer layer of the belt structure 10, from the equatorial plane x-x of the tire 1 toward the opposite shoulder portions F, G of the same, preferably according to a prefixed relation.

In a particularly advantageous embodiment, the aforesaid relation keep to a substantially constant value along the axial development of the belt structure 10 the product of the mass of coils 14a of the cord 14 arranged within a unitary portion of a given value by the square of the distance between the center of said portion and the rotation axis of the tire 1, so that during tire rolling the resulting centrifugal forces in each of said portions have all the same value, causing a uniform stress state from one end to the other of the belt structure 10.

Preferably, the axial thickness according to which the coils 14a of the cord 14 are distributed is determined by the following relation:

$$Nx = K\frac{R^2}{r^2}No$$

wherein:

- No is the number of coils 14a of the cord 14 arranged in a central portion of unitary value, for instance 1 cm, located on either side of the equatorial plane x-x;

- R is the distance between the center of said central portion in the radially outer layer of the belt structure 10 and the rotation axis of the tire 1;

- r is the distance between the center of one of said unitary portions located in the region comprised between the center and the ends of the radially outer layer of the belt structure 10 and the rotation axis of the tire 1;

- K is a parameter that takes into account the constituent material and the formation of cords 14, as well as the amount of rubber around the cord 14 and the weight of the radially inner layer 11 of the belt structure 10 at said unitary portion, which is variable with variations in the material type and in the structural features of the radially inner layer 11 along the crown profile that diverge from the reference values.

This parameter K may take a value substantially close to 1 if the cords 14 have the same formation and all the connected materials are the same throughout the layers, and different values according to variations of materials and formation of the reinforcing elements along the peripheral development of the belt structure 10.

Solely by way of example, a layer including zero-degree cords might be devised comprising textile cords (of aramid) in a central position and metal cords (HE) in the adjacent side portions, and vice-versa.

Clearly, those skilled in the art may find other relations which, according to the aforesaid design variables, would allow to achieve at the same time a differentiated stiffness along the axial direction and a stress uniformity in the belt structure of the running tire, by varying in a controlled and predetermined manner the thickness of the aforesaid cords 14.

As to the thickness of the zero-degree cords in the equatorial zone E, where the maximum thinning out takes place, said thickness is preferably not greater than 8 and more preferably comprised between 3 and 10 cords/cm.

The width of said equatorial zone E is preferably comprised between 10% and 30% of the axial development of the belt structure 10.

Conveniently, the quantity of cords 14 in said equatorial zone E is equal to a value comprised between 100% and 80% of the quantity of cords near the shoulder portions F, G of the tire 1, where the thickness of said cords is preferably not greater than 10 and more preferably comprised between 10 and 8 cords/cm.

A tread 15, by means of which the tire 1 gets in touch with the ground, is applied in a known manner onto the belt structure 10 described hereinabove.

The tread 15 is subsequently molded with a suitable tread pattern, comprising in a known manner a plurality of blocks, all indicated by 16, defined between a plurality of grooves 17, only some of which are visible in Figure 1.

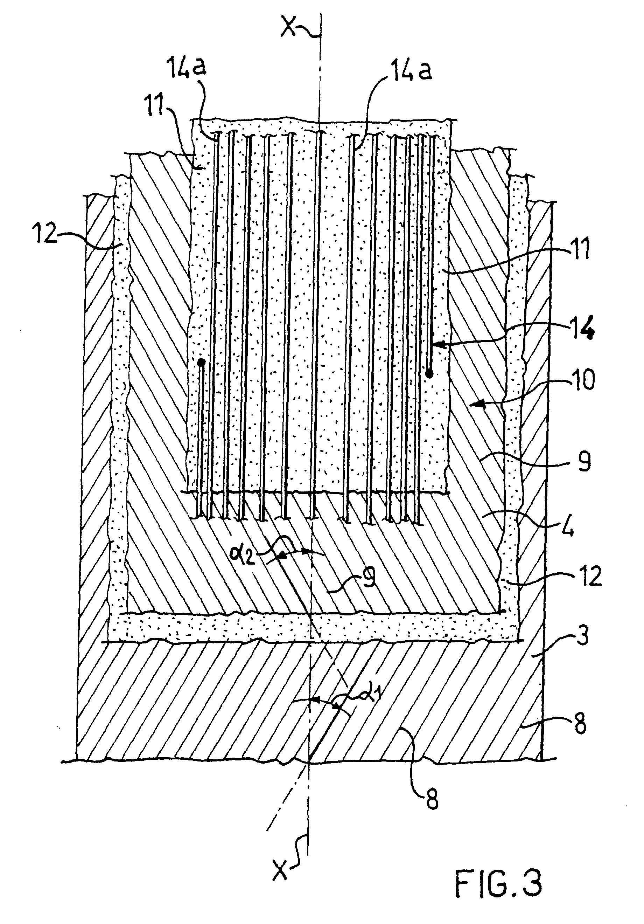

According to an alternative embodiment, shown in Figure 3, the tire 1 may further comprise a second sheet 12 made of an elastomeric material interposed between the carcass plies 3 and 4.

In this way, it is possible to absorb the shear stresses which are generated between plies 3, 4 of the carcass structure 2 during rolling of the tire 1.

Also in this case and just in the same way as has been illustrated with reference to the sheet 11, the sheet 12 preferably incorporates homogeneously dispersed reinforcing fibrous fillers made of a material selected from the group comprising textile and metal fibers, fiberglass or short fibrillated aramid fibers.

Conveniently, the sheet 12 incorporates as a reinforcing fibrous filler the so-called aramid pulp (short fibrillated fibers of poly-paraphenylene-terephtalamide), of the type commercially known as "Kevlar®-pulp" or "Twaron®-pulp", or equivalent binding means, suitable to increase the properties of mechanical strength and stretcheability of the elastomeric material in the green state, without substantially altering the adhesion properties thereof.

In fact, it was found that in the presence of aramid fibers dispersed in the composition of the elastomeric material that makes it up, the sheet 12 may take the form of an extremely thin sheet, for instance of a thickness of 0.075-0,5 mm, without undergoing any laceration as a consequence of the permanent sets caused in the same during the manufacturing steps of the tire.

Also in this case, it was found that the best results are achieved by incorporating aramid pulp in the composition of the green elastomer in an amount comprised between 1 and 10 phr (parts by weight per 100 parts of rubber) and using fibers of a length comprised between 0.1 and 2.5 mm.

In order to evaluate the quality improvements achieved by the tires of the invention, a set of tests was carried out to compare the tires of the invention with tires of known type for the same use and having a different structure.

More particularly, the tires of the invention described hereinabove were mounted on the front and rear wheels of a motor-cycle of the so-called "touring" type, so as to compare them with the following couples of tires of known type:

1) a first couple of tires Model Metzeler ME1 (type A) provided with a cross-plies carcass and with a belt structure constituted by couples of rubberized fabric strips having cords placed at an angle with respect to the equatorial plane of the tire on both the front and the rear wheel;

2) a second couple of tires (type B) comprising:

2a) a rear tire Model Metzeler MEZ2 provided with a radial carcass and with a belt structure comprising a winding of zero-degree cords;

2b) a front tire Model Metzeler MEZ2 provided with a radial carcass and with a belt structure constituted by couples of strips of rubberized fabric having cords placed at an angle with respect to the equatorial plane of the tire.

The characteristics of the motor-bike used in the tests were the following:

- model : BMW TOURING

- front tire

  size :             120/70-B17 58V

  inflation pressure :   2.5 bar

  rim :             3.50"

- rear tire

  size :             160/70-B17 79V

  inflation pressure :   2.9 bar

  rim :             4.50"

The tests were directed to evaluate the quality level of the main parameters of driving behavior especially those dependent on the constitution of the carcass structure/belt structure assembly, assigning a mark comprised between 0 and 10 to each parameter considered.

Table I hereinbelow shows the results of the tests.

Table I

| Parameter | Type A | Type B | Invention |
|---|---|---|---|
| Shimmy | 5 | 6 | 8 |
| Handling | 7 | 6 | 8 |
| Directional stability | 5 | 6 | 8 |
| Curve roadholding | 6 | 5 | 8 |
| Comfort | 5 | 7 | 8 |
| Wear uniformity | 6 | 7 | 7 |
| Kilometric yield | 5 | 7 | 7 |

By examining the results of the above table it appears immediately evident the improvement achieved by the tires according to the invention as compared with those of the prior art.

Besides, it must be pointed out that such improved results have been achieved together with a weight reduction with respect to the tires designed for use on the test motor-bike, weight reduction which may be estimated to be about 0.2 kg for the front tire and about 0.5 kg for the rear tire, to the advantage of an inertia reduction due to the non suspended masses and, consequently, of the vehicle handling.

Obviously, those skilled in the art may introduce modifications and variants to the above described invention in order to satisfy specific and contingent application requirements, which modification and variants fall anyhow within the scope of protection as is defined by the appended claims.

**Claims**

1.  A high transverse-curvature tire for two-wheeled vehicles comprising:

    a) a cross-plies carcass structure (2) including at least one couple of superposed plies (3, 4), each provided with reinforcing cords (8, 9) essentially parallel to one another in each ply (3, 4) and oriented along directions inclined in each ply (3, 4) and opposite with respect to the cords of the adjacent ply (3, 4) with respect to the equatorial plane" (x-x) of the tire;

    b) a belt structure (10) coaxially extending around the carcass structure (2), including:

       i) a radially inner layer comprising at least one sheet (11) made of an elastomeric material;

ii) a radially outer layer including a plurality of circumferential coils (14a), axially arranged side by side, of at least one inextensible cord, circumferentially wound at a substantially null angle with respect to the equatorial plane (x-x) of the tire;

c) a tread (15), coaxially extending around the belt structure (10).

2. The tire according to claim 1, wherein the reinforcing cords (8, 9) incorporated in said at least one couple of superposed plies (3, 4) of the carcass structure (2) form a crown angle comprised between 25° and 70° with respect to the equatorial plane (x-x) of the tire.

3. The tire according to claim 1, wherein the reinforcing cords (8, 9) incorporated in said carcass plies (3, 4) are made of a material different from the material of the reinforcing cords (8, 9) in the radially adjacent ply (3, 4).

4. The tire according to claim 1, wherein the carcass structure (2) further comprises a sheet (12) made of an elastomeric material interposed between said carcass plies (3, 4).

5. The tire according to claim 4, wherein said sheet (12) made of an elastomeric material interposed between said carcass plies (3, 4) incorporates appropriate binding means suitable to increase the stretcheability properties without substantially altering the adhesion properties thereof.

6. The tire according to claim 1, wherein said at least one sheet (11) made of an elastomeric material of the radially inner layer of the belt structure (10) incorporates appropriate binding means suitable to increase the stretcheability properties without substantially altering the adhesion properties thereof.

7. The tire according to claims 5 or 6, **characterized in that** said binding means comprise aramid pulp.

8. The tire according to claim 1, wherein said at least one sheet (11) made of an elastomeric material of the belt structure (10) has a thickness comprised between 0.5 and 3 mm.

9. The tire according to claim 1, wherein said cord coils (14a), arranged at a substantially null angle with respect to the equatorial plane (x-x) of the tire, are distributed with a constant thickness throughout the axial development of said belt structure (10).

10. The tire according to claim 1, wherein said cord coils (14a), arranged at a substantially null angle with respect to the equatorial plane (x-x) of the tire, are distributed with a variable thickness throughout the axial development of said belt structure (10).

11. The tire according to claim 10, wherein the thickness of said cord coils (14a) progressively increases from said equatorial plane (x-x) toward the ends of the belt structure (10), said thickness having a value not higher than 15 cords/cm in a portion located on either side of the equatorial plane (x-x).

12. The tire according to claim 11, wherein the thickness according to which said cord coils (14a) are distributed is determined by the following relation:

$$Nx = K\frac{R^2}{r^2}No$$

wherein:

- No is the number of cord coils (14a) arranged in a central portion of unitary length located on either side of the equatorial plane;

- R is the distance between the center of said portion and the rotation axis of the tire;

- r is the distance between the center of the generic unitary portion comprised between the equatorial plane (x-x) and the ends of the radially outer layer of the belt structure (10) and the rotation axis of the tire;

- K is a parameter that takes into account the constituent material and the formation of cords (14), as well as the amount of rubber around the cord (14), and the weight of the radially inner layer (11) of the belt structure (10) at said unitary portion, which is variable with variations in the type of material and in the structural features of the radially inner layer (11) of the belt structure along the crown profile that diverge from the reference values.

**Patentansprüche**

1. Reifen mit hoher Querkrümmung für Zweiradfahrzeuge und

   a) mit einem Kreuzlagen-Karkassenaufbau (2), der wenigstens ein Paar von übereinandergelegten Lagen (3, 4) aufweist, von denen jede mit Verstärkungskorden (8, 9) versehen ist, die in jeder Lage (3, 4) im wesentlichen parallel zueinander und längs Richtungen ausgerichtet sind, die in jeder Lage (3, 4) geneigt und zu den Korden in der benachbarten Lage (3, 4) bezogen auf die Äquatorialebene (x-x) des Reifens entgegengesetzt sind,
   b) mit einem Gurtaufbau (10), der sich koaxial um den Karkassenaufbau (2) herum erstreckt und

      i) eine radial innere Schicht mit wenigstens einer Bahn (11), die aus einem elastomeren Material hergestellt ist, und
      ii) eine radial äußere Schicht mit einer Vielzahl von axial nebeneinander angeordneten Umfangswindungen (14a) aus wenigstens einem nichtdehnbaren Kord aufweist, der um den Umfang mit einem Winkel von im Wesentlichen 0 bezogen auf die Äquatorialebene (x-x) des Reifens gelegt ist, und

   c) mit einer Lauffläche (15), die sich koaxial um den Gurtaufbau (10) erstreckt.

2. Reifen nach Anspruch 1, bei welchem die Verstärkungskorde (8, 9), die in dem wenigstens einen Paar von übereinandergelegten Lagen (3, 4) des Karkassenaufbaus eingeschlossen sind, einen Kronenwinkel zwischen 25° und 70° bezogen auf die Äquatorialebene (x-x) des Reifens bilden.

3. Reifen nach Anspruch 1, bei welchem die Verstärkungskorde (8, 9), die in die Karkassenlagen (3, 4) eingeschlossen sind, aus einem Material hergestellt sind, das sich von dem Material der Verstärkungskorde (8, 9) in der radial angrenzenden Lage (3, 4) unterscheidet.

4. Reifen nach Anspruch 1, bei welchem der Karkassenaufbau (2) weiterhin eine aus einem elastomeren Material hergestellte Bahn (12) aufweist, die zwischen den Karkassenlagen (3, 4) angeordnet ist. ,

5. Reifen nach Anspruch 4, bei welchem die aus einem elastomeren Material hergestellte Bahn (12), die zwischen den Karkassenlagen (3, 4) angeordnet ist, entsprechende Bindemittel einschließt, die zur Erhöhung der Streckbarkeitseigenschaften geeignet sind, ohne die Haftungseigenschaften im Wesentlichen zu ändern.

6. Reifen nach Anspruch 1, bei welchem die wenigstens eine aus einem elastomeren Material hergestellte Bahn (11) der radial inneren Schicht des Gurtaufbaus (10) entsprechende Bindemittel einschließt, die zur Erhöhung der Streckbarkeitseigenschaften geeignet sind, ohne ihre Haftungseigenschaften im Wesentlichen zu ändern.

7. Reifen nach Anspruch 5 oder 6, **dadurch gekennzeichnet, dass** die Bindemittel eine Aramidfasermasse aufweisen.

8. Reifen nach Anspruch 1, bei welchem. die wenigstens eine aus einem elastomeren Material hergestellte Bahn (11) des Gurtaufbaus (10) eine Dicke zwischen 0,5 und 3 mm hat.

9. Reifen nach Anspruch 1, bei welchem die Kordwindungen (14a), die mit einem Winkel von im Wesentlichen 0 bezogen auf die Äquatorialebene (x-x) des Reifens angeordnet sind, mit einer konstanten Dichte über die axiale Abwicklung des Gurtaufbaus (10) verteilt sind.

10. Reifen nach Anspruch 1, bei welchem die Kordwindungen (14a), die in einem Winkel von im Wesentlichen 0 bezogen auf die Äquatorialebene (x-x) des Reifens angeordnet sind, mit einer variablen Dichte über die axiale Abwicklung des Gurtaufbaus (10) verteilt sind.

11. Reifen nach Anspruch 10, bei welchem die Dicke der Kordwindungen (14a) von der Äquatorialebene (x-x) aus zu

**EP 0 928 704 B1**

den Enden des Gurtaufbaus (10) hin fortschreitend zunimmt, wobei die Dichte einen Wert hat, der nicht größer ist als 15 Korde/cm in einem Abschnitt, der sich auf jeder Seite der Äquatorialebene (x-x) befindet.

12. Reifen nach Anspruch 11, bei welchem die Dichte, mit der die Kordwindungen (14a) verteilt sind, durch die folgende Beziehung bestimmt wird:

$$Nx = K\frac{R^2}{r^2}No$$

wobei

- No die Anzahl der Kordwindungen (14a) ist, die in einem zentralen Abschnitt einer Einheitslänge angeordnet sind, die sich auf jeder Seite der Äquatorialebene befindet,
- R die Entfernung zwischen der Mitte des Abschnitts und der Drehachse des Reifens ist,
- r die Entfernung zwischen der Mitte des zwischen der Äquatorialeben (x-x) und den Enden der radial äußeren Schicht des Gurtaufbaus (10) befindlichen gattungsgemäßen Einheitsabschnitts und der Drehachse des Reifens ist und
- K ein Parameter ist, der das Grundstoffmaterial und die Bildung der Korde (14) sowie die Menge des Kautschuks um den Kord (14) und das Gewicht der radial inneren Schicht (11) des Gurtaufbaus (10) an dem Einheitsabschnitt berücksichtigt, das sich mit Änderungen der Art des Materials und der Aufbauformen der radial inneren Schicht (11) des Gurtaufbaus längs des Kronenprofils, die von den Bezugswerten abweichen, ändert.

**Revendications**

1. Pneumatique à grande courbure transversale pour véhicules à deux roues, comprenant :

a) une structure de carcasse (2) à plis transversaux comportant au moins une paire de plis superposés (3, 4) pourvus chacun de fils de renforcement câblés (8, 9) sensiblement parallèles les uns aux autres dans chaque pli (3, 4) et orientés dans des directions inclinées dans chaque pli (3, 4) et opposées par rapport aux fils câblés du pli adjacent (3, 4) par rapport au plan équatorial (x-x) du pneumatique ;
b) une structure de ceinture (10) s'étendant de manière coaxiale autour de la structure de carcasse (2), comprenant :

i) une couche radialement intérieure comportant au moins une nappe (11) en matière élastomère ;
ii) une couche radialement extérieure comportant une pluralité de spires circonférentielles (14a), disposées axialement côte à côte, d'au moins un fil câblé non extensible, enroulé dans la direction circonférentielle suivant un angle sensiblement nul par rapport au plan équatorial (x-x) du pneumatique ;

c) un fil (15), s'étendant de manière coaxiale autour de la structure de ceinture (10).

2. Pneumatique selon la revendication 1, dans lequel les fils de renforcement câblés (8, 9) incorporés dans ladite au moins une paire de plis superposés (3, 4) de la structure de carcasse (2) forment un angle de bombé compris entre 25° et 70° par rapport au plan équatorial (x-x) du pneumatique.

3. Pneumatique selon la revendication 1, dans lequel les fils de renforcement câblés (8, 9) incorporés dans lesdits plis (3, 4) de carcasse sont en matière différente de la matière des fils de renforcement câblés (8, 9) présents dans le pli radialement adjacent (3, 4).

4. Pneumatique selon la revendication 1, dans lequel la structure de carcasse (2) cômprend en outre une nappe (12) en matière élastomère intercalée entre lesdits plis (3, 4) de carcasse.

5. Pneumatique selon la revendication 4, dans lequel ladite nappe (12) en matière élastomère intercalée entre lesdits plis (3, 4) de carcasse contient un liant approprié permettant d'accroître les propriétés d'étirabilité sans modifier notablement les propriétés d'adhérence de celui-ci.

**6.** Pneumatique selon la revendication 1, dans lequel ladite au moins une nappe (11) en matière élastomère de la couche radialement intérieure de la structure de ceinture (10) contient un liant approprié permettant d'accroître les propriétés d'étirabilité sans modifier notablement les propriétés d'adhérence de celui-ci.

**7.** Pneumatique selon la revendication 5 ou 6, **caractérisé en ce que** ledit liant est constitué par de la pulpe de fibres aramides.

**8.** Pneumatique selon la revendication 1, dans lequel ladite au moins une nappe (11) en matière élastomère de la structure de ceinture (10) a une épaisseur comprise entre 0,5 et 3 mm.

**9.** Pneumatique selon la revendication 1, dans lequel lesdites spires (14a) de fils câblés, disposées suivant un angle sensiblement nul par.rapport au plan équatorial (x-x) du pneumatique, sont réparties avec une épaisseur constante dans tout le développement axial de ladite structure de ceinture (10).

**10.** Pneumatique selon la revendication 1, dans lequel lesdites spires (14a) de fils câblés, disposées suivant un angle sensiblement nul par rapport au plan équatorial (x-x) du pneumatique, sont réparties avec une épaisseur variable dans tout le développement axial de ladite structure de ceinture (10).

**11.** Pneumatique selon la revendication 10, dans lequel l'épaisseur desdites spires (14a) de fils câblés augmente progressivement depuis ledit plan équatorial (x-x) vers les extrémités de la structure de ceinture (10), ladite épaisseur ayant une valeur non supérieure à 15 fils câblés/cm dans une partie située de part et d'autre du plan équatorial (x-x).

**12.** Pneumatique selon la revendication 11, dans lequel l'épaisseur sur laquelle lesdites spires (14a) de fils câblés sont réparties est déterminée par le relation suivante :

$$Nx = K\frac{R^2}{r^2}No$$

où :

- No est le nombre de spires (14a) de fils câblés disposés dans une partie centrale de longueur arbitraire située de part et d'autre du plan équatorial ;
- R est la distance entre le centre de ladite partie et l'axe de rotation du pneumatique ;
- r est la distance entre le centre de la partie générique unitaire comprise entre le plan équatorial (x-x) et les extrémités de la couche radialement extérieure de la structure de ceinture (10) et l'axe de rotation du pneumatique ;
- K est un paramètre qui prend en compte la matière constitutive et la formation des fils câblés (14), ainsi que la quantité de caoutchouc autour du fil câblé (14), et le poids de la couche radialement intérieure (11) de la structure de ceinture (10) dans ladite partie unitaire, qui est variable avec des variations du type de matière et des caractéristiques de structure de la couche radialement intérieure (11) de la structure de ceinture sur le profil du bombé qui s'écartent des valeurs de référence.

FIG.1

FIG.2

EP 0 928 704 B1

FIG.3

16